(19) Europäisches Patentamt / European Patent Office / Office européen des brevets

(11) **EP 2 991 250 B1**

(12) **EUROPEAN PATENT SPECIFICATION**

(45) Date of publication and mention
of the grant of the patent:
**27.06.2018 Bulletin 2018/26**

(21) Application number: **14800954.1**

(22) Date of filing: **21.05.2014**

(51) Int Cl.:
*H04J 3/06* (2006.01)

(86) International application number:
**PCT/CN2014/077953**

(87) International publication number:
**WO 2014/187310 (27.11.2014 Gazette 2014/48)**

(54) **METHOD AND APPARATUS FOR PTP SYNCHRONOUS NETWORK**

VERFAHREN UND VORRICHTUNG FÜR SYNCHRONES PTP-NETZWERK

PROCÉDÉ ET APPAREIL POUR UN RÉSEAU SYNCHRONE PTP

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2013 CN 201310195327**

(43) Date of publication of application:
**02.03.2016 Bulletin 2016/09**

(73) Proprietor: **Huawei Technologies Co., Ltd.**
**Longgang District**
**Shenzhen, Guangdong 518129 (CN)**

(72) Inventors:
• **YAN, Linyang**
  **Shenzhen**
  **Guangdong 518129 (CN)**
• **LIU, Song**
  **Shenzhen**
  **Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A1- 2 367 309        CN-A- 101 232 457
CN-A- 102 404 103       CN-A- 102 546 009
CN-A- 102 843 205       CN-A- 103 312 428
US-A1- 2011 122 775

**Description**

TECHNICAL FIELD

The present invention relates to the field of communications, and in particular, to a method for a Precision Time Protocol (Precision Time Protocol, PTP) synchronization network and an apparatus.

BACKGROUND

In order to fulfill a demand of high precision time synchronization, the IEEE (Institute of Electrical and Electronic Engineers, Institute of Electrical and Electronics Engineers) puts forward the PTP. The PTP can implement sub-microsecond-level time synchronization. In a live network, a case in which time synchronization performance of a PTP synchronization network is faulty often occurs, which affects deployment of the PTP synchronization network in the live network.

In the prior art, the time synchronization performance of the PTP synchronization network may be obtained by using a meter. The meter may be a Time ACC-007 (Advanced Clock Calibration, time precision integrated tester), an oscilloscope, an ANT-20 (network integration analyzer), or an MTS-8000 (optical spectrum analyzer). Costs of obtaining the time synchronization performance of the PTP network by using the meter are relatively high. CN 102 546 009 A discloses a method and device for detecting the symmetry of an optical fiber. The method for detecting the symmetry of an optical fiber comprises: a boundary clock receiving, through a slave port, a first time stamp message carrying a first time stamp, and receiving, through a passive port, a second time stamp message carrying a second time stamp; the boundary clock determining the symmetry of an optical fiber at least according to the first time stamp and the second time stamp.

SUMMARY

Embodiments of the present invention provide a method for a PTP synchronization network and an apparatus, which help to reduce costs of obtaining time synchronization performance of the PTP synchronization network.
The following technical solutions are used in the embodiments of the present invention.
According to a first aspect, a method for a PTP synchronization network is provided, including:

executing, by a slave clock apparatus, an operation of time synchronization with a first apparatus according to the PTP through a first port, where the first apparatus is an upstream node of the slave clock apparatus, the first apparatus is located on a first link, a link from a master clock apparatus to the slave clock apparatus includes the first link and a second link, the slave clock apparatus includes the first port and a second port, the first port is located on the first link, the second port is located on the second link, a state of the first port is slave, and a state of the second port is passive;
setting the state of the second port to slave;
obtaining, by the slave clock apparatus according to the PTP through the second port, information required for determining a time offset (Offset in time) between the slave clock apparatus and a second apparatus, where the second apparatus is an upstream node of the slave clock apparatus, and the second apparatus is located on the second link; and
determining, by the slave clock apparatus, an offset according to the information, where the offset is equal to M multiplied by the time offset, and M is not equal to 0.

wherein, after the determining, by the slave clock apparatus, an offset according to the information, the method further includes:
if an absolute value of the offset is greater than a threshold, determining, by the slave clock apparatus, that time synchronization performance of the first link is faulty or time synchronization performance of the second link is faulty.
Further, according to the first aspect, after the determining, by the slave clock apparatus, that time synchronization performance of the first link is faulty or time synchronization performance of the second link is faulty, the method further includes:
sending, by the slave clock apparatus, a message to a third apparatus, where the message is used for identifying that the time synchronization performance of the first link is faulty or the time synchronization performance of the second link is faulty.
With reference to the first aspect of the first aspect, in a first possible implementation manner of the first aspect, the obtaining, by the slave clock apparatus according to the PTP through the second port, information required for determining a time offset between the slave clock apparatus and a second apparatus includes:

exchanging, by the slave clock apparatus with the second apparatus through the second port, multiple messages corresponding to the operation of time synchronization executed by the slave clock apparatus with the second apparatus, so as to obtain the information.

With reference to the first possible implementation manner of the first aspect, in a second possible implementation manner of the first aspect, the exchanging, by the slave clock apparatus with the second apparatus through the second port, multiple messages corresponding to the operation of time synchronization executed by the slave clock apparatus with the second apparatus includes:

receiving, by the slave clock apparatus through the second port, a synchronization (Sync) message sent by the second apparatus, where a time at which the slave clock apparatus receives the Sync message is $t2$, the Sync message includes a timestamp $t1$, and a time at which the second apparatus sends the Sync message is $t1$;

sending, by the slave clock apparatus to the second apparatus through the second port, a delay request (Delay_Req) message corresponding to the Sync message, where a time at which the slave clock apparatus sends the Delay_Req message is $t3$; and

receiving, by the slave clock apparatus through the second port, a delay response (Delay_Resp) message that is sent by the second apparatus and that is corresponding to the Delay_Req message, where the Delay_Resp message includes a timestamp $t4$, a time at which the second apparatus receives the Delay_Req message is $t4$, and $t1$, $t2$, $t3$, and $t4$ are the information.

With reference to the first aspect, in a third possible implementation manner of the first aspect, after the determining, by the slave clock apparatus, an offset according to the information, the method further includes:
sending, by the slave clock apparatus, a message to a third apparatus, where the message includes the offset.

With reference to the first aspect, in a fourth possible implementation manner of the first aspect, after the determining, by the slave clock apparatus, an offset according to the information, the method further includes:
displaying, by the slave clock apparatus, the offset by using a display apparatus, where the slave clock apparatus includes the display apparatus.

According to a second aspect, a slave clock apparatus is provided, including:

an executing unit, configured to execute an operation of time synchronization with a first apparatus according to the PTP through a first port, where the first apparatus is an upstream node of the slave clock apparatus, the first apparatus is located on a first link, a link from a master clock apparatus to the slave clock apparatus includes the first link and a second link, the slave clock apparatus includes the first port and a second port, the first port is located on the first link, the second port is located on the second link, a state of the first port is slave, and a state of the second port is passive;

a setting unit, configured to set the state of the second port to slave;

a first determining unit, configured to obtain, according to the PTP through the second port, information required for determining a time offset between the slave clock apparatus and a second apparatus, where the second apparatus is an upstream node of the slave clock apparatus, and the second apparatus is located on the second link; a second determining unit, configured to determine an offset according to the information obtained by the first determining unit, where the offset is equal to $M$ multiplied by the time offset, and $M$ is not equal to 0; and

a third determining unit, configured to: if an absolute value of the offset determined by the second determining unit is greater than a threshold, determine that time synchronization performance of the first link is faulty or time synchronization performance of the second link is faulty.

Further, according to the second aspect, the slave clock apparatus further includes:
a sending unit, configured to send a message to a third apparatus, where the message is used for identifying that the time synchronization performance of the first link is faulty or the time synchronization performance of the second link is faulty, which is determined by the third determining unit.

With reference to the second aspect, in a first possible implementation manner of the second aspect, the first determining unit is configured to:
exchange, with the second apparatus through the second port, multiple messages corresponding to the operation of time synchronization executed by the slave clock apparatus with the second apparatus, so as to obtain the information.

With reference to the first possible implementation manner of the second aspect, in a second possible implementation manner of the second aspect, the first determining unit includes:

a first receiving subunit, configured to receive, through the second port, a Sync message sent by the second apparatus, where a time at which the slave clock apparatus receives the Sync message is $t2$, the Sync message includes a timestamp $t1$, and a time at which the second apparatus sends the Sync message is $t1$;

a sending subunit, configured to send, to the second apparatus through the second port, a Delay_Req message corresponding to the Sync message, where a time at which the slave clock apparatus sends the Delay_Req message is t3; and

a second receiving subunit, configured to receive, through the second port, a Delay_Resp delay response message that is sent by the second apparatus and that is corresponding to the Delay_Req message, where the Delay_Resp message includes a timestamp t4, a time at which the second apparatus receives the Delay_Req message is t4, and t1, t2, t3, and t4 are the information.

With reference to the second aspect, in a third possible implementation manner of the second aspect, the slave clock apparatus further includes:

a sending unit, configured to send a message to a third apparatus, where the message includes the offset determined by the second determining unit.

With reference to the second aspect, in a fourth possible implementation manner of the second aspect, the slave clock apparatus further includes:

a display unit, configured to display the offset determined by the second determining unit, where the slave clock apparatus includes the display apparatus.

In the foregoing technical solutions, the slave clock apparatus obtains, according to the PTP through the second port, the information required for determining the time offset between the slave clock apparatus and the second apparatus; the slave clock apparatus determines the offset according to the information, where the offset is equal to M multiplied by the time offset, and M is not equal to 0; and if the absolute value of the offset is greater than the threshold, it is determined that the time synchronization performance of the first link is faulty or the time synchronization performance of the second link is faulty. The foregoing technical solutions help to reduce costs of obtaining time synchronization performance of a Precision Time Protocol synchronization network.

BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic structural diagram of a network structure according to an embodiment of the present invention;

FIG. 2 is a schematic flowchart of a method for a PTP synchronization network according to an embodiment of the present invention;

FIG. 3 is a schematic structural diagram of a slave clock apparatus according to an embodiment of the present invention; and

FIG. 4 is a schematic structural diagram of a slave clock apparatus according to an embodiment of the present invention.

DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The IEEE1588V2 Precision Time Protocol put forward by the IEEE (Institute of Electrical and Electronic Engineers, Institute of Electrical and Electronics Engineers) can be used for real-time clocks of nodes in precise and synchronous distributed network communication. The 1588 synchronization network may be deployed as a ring network, and an apparatus in the ring network may be a router, a PTN (Packet Transport Network, packet transport network) wavelength division device, or the like.

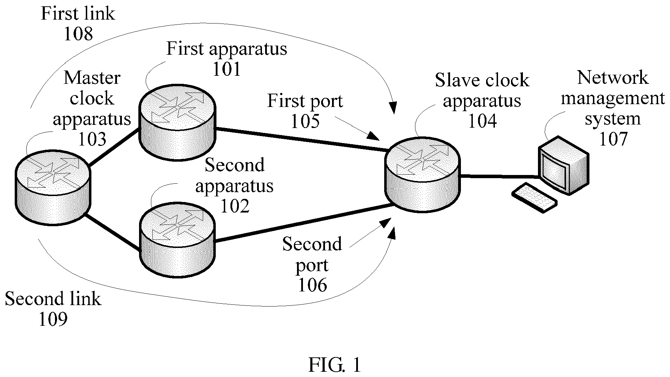

FIG. 1 is a schematic structural diagram of a network structure according to an embodiment of the present invention. Referring to FIG. 1, the network structure includes a first apparatus 101, a second apparatus 102, a master clock apparatus 103, a slave clock apparatus 104, and a network management system 107.

The slave clock apparatus 104 executes an operation of time synchronization with the first apparatus 101 according to the PTP through a first port 105, where the first apparatus 101 is an upstream node of the slave clock apparatus 104, the first apparatus 101 is located on a first link 108, a link from the master clock apparatus 103 to the slave clock apparatus 104 includes the first link 108 and a second link 109, the slave clock apparatus 104 includes the first port 105 and a second port 106, the first port 105 is located on the first link 108, the second port 106 is located on the second link 109, a state of the first port 105 is slave, and a state of the second port is passive.

The slave clock apparatus 104 sets the state of the second port 106 of the slave clock apparatus 104 to slave.

The slave clock apparatus 104 obtains, according to the PTP through the second port 106, information required for determining a time offset between the slave clock apparatus 104 and the second apparatus 102, where the second apparatus 102 is an upstream node of the slave clock apparatus 104, and the second apparatus 102 is located on the second link 109.

The slave clock apparatus 104 determines an offset according to the information, where the offset is equal to M multiplied by the time offset, and M is not equal to 0.

For example, each of the first apparatus 101, the second apparatus 102, the master clock apparatus 103, and the slave clock apparatus 104 may be a router.

For example, the network management system 107 may be configured to manage routers on the first link 108 and the second link 109.

For example, the first apparatus 101 may be a previous hop node of the slave clock apparatus 104. The first apparatus 101 may also be connected to the slave clock apparatus 104 by using another apparatus located on the first link 108. The another apparatus may be a transparent clock (Transparent Clock).

The second apparatus 102 may be a previous hop node of the slave clock apparatus 104. The second apparatus 102 may also be connected to the slave clock apparatus 104 by using another apparatus located on the second link 109. The another apparatus may be a transparent clock.

For example, the slave clock apparatus 104 may set the state of the second port 106 of the slave clock apparatus 104 to slave by using a command line.

For example, after the state of the second port 106 of the slave clock apparatus 104 is set to slave, the slave clock apparatus 104 may exchange, with the second apparatus 102 through the second port 106, multiple messages corresponding to the operation of time synchronization executed by the slave clock apparatus 104 with the second apparatus 102, so as to obtain the information.

After the slave clock apparatus 104 determines the offset according to the information, if an absolute value of the offset is greater than a threshold, the slave clock apparatus 104 may determine that time synchronization performance of the first link 108 is faulty or time synchronization performance of the second link 109 is faulty.

In the foregoing technical solution, the slave clock apparatus obtains, according to the PTP through the second port, the information required for determining the time offset between the slave clock apparatus and the second apparatus; the slave clock apparatus determines the offset according to the information, where the offset is equal to M multiplied by the time offset, and M is not equal to 0; and if the absolute value of the offset is greater than the threshold, it is determined that the time synchronization performance of the first link is faulty or the time synchronization performance of the second link is faulty. The foregoing technical solution helps to reduce costs of obtaining time synchronization performance of a Precision Time Protocol synchronization network.

A person skilled in the art may understand that a state of a port in the Precision Time Protocol synchronization network may be master, slave, or passive.

A person skilled in the art may understand that, when a port of an apparatus in the Precision Time Protocol synchronization network is master or slave, time synchronization may be performed by exchanging a message with another clock apparatus in the Precision Time Protocol synchronization network.

For example, in the network structure shown in FIG. 1, it may be determined, according to a BMC algorithm (Best Master Clock Algorithm, best master clock algorithm) of the Precision Time Protocol Version 2, that the state of the first port 105 of the slave clock apparatus 104 is slave, and the state of the second port 106 is passive. The slave clock apparatus 104 implements time synchronization with the master clock apparatus 103 by using the first apparatus 101 on the first link 108. The second link 109 is a standby link of the first link 108. If the first link 108 is faulty, the state of the first port 105 may become passive. The state of the second port 106 may become slave. The slave clock apparatus 104 may implement time synchronization with the master clock apparatus 103 by using the second apparatus 102 on the second link 109.

The state of the second port 106 of the slave clock apparatus 104 is set to slave. The second port 106 obtains the information required for determining the time offset between the slave clock apparatus 104 and the second apparatus 102.

For example, the state of the second port 106 of the slave clock apparatus 104 may be set to slave by using a command line.

For example, the information may be a timestamp carried in a message that is exchanged by the slave clock apparatus 104 with the second apparatus 102. The timestamp may be a path delay, a residence time, or an asymmetrical modification.

For example, the obtaining, by the slave clock apparatus 104 according to the PTP through the second port 106, information required for determining a time offset between the slave clock apparatus 104 and the second apparatus 102 includes:

exchanging, by the slave clock apparatus 104 with the second apparatus 102 through the second port 106, the multiple messages corresponding to the operation of time synchronization executed by the slave clock apparatus 104 with the second apparatus 102, so as to obtain the information.

The information may be t1, t2, t3, and t4, where

for t1 and t2: the slave clock apparatus 104 receives, through the second port 106, a Sync synchronization message sent by the second apparatus 102, where a time at which the slave clock apparatus 104 receives the Sync message is t2, the Sync message includes the timestamp t1, and a time at which the second apparatus 102 sends the Sync message is t1;

for t3: the slave clock apparatus 104 sends, to the second apparatus 102 through the second port 106, a Delay_Req delay request message corresponding to the Sync message, where a time at which the slave clock apparatus 104 sends the Delay_Req message is t3; and

for t4: the slave clock apparatus 104 receives, through the second port 106, a Delay_Resp delay response message that is sent by the second apparatus 102 and corresponds to the Delay_Req message, where the Delay_Resp message includes the timestamp t4, and a time at which the second apparatus 102 receives the Delay_Req message is t4.

The slave clock apparatus 104 determines the offset according to the information, where the offset is equal to M multiplied by the time offset between the slave clock apparatus 104 and the second apparatus 102, and M is not equal to 0.

For example, the time offset (Offset) may be obtained by using the following method:

$$t2 - t1 = Delayms + Offset;$$

$$t4 - t3 = Delaysm - Offset;$$

and

$$(t2 - t1) - (t4 - t3) = (Delayms + Offset) - (Delaysm - Offset);$$

therefore, Offset = [(t2 - t1) - (t4 - t3) - (Delayms - Delaysm)]/2; and

apparently, if Delayms = Delaysm, delays of a transmit path and a receive path between the second port 106 of the slave clock apparatus 104 and a master port of the second apparatus 102 are symmetrical; and

$$Offset = [(t2 - t1) - (t4 - t3)]/2,$$

where

Delayms is a delay of the transmit path between the master port of the second apparatus 102 and the second port 106 of the slave clock apparatus 104, and Delaysm is a delay of a transmit path from the slave clock apparatus 104 to the master port of the second apparatus 102.

For example, if the absolute value of the offset is greater than the threshold, the slave clock apparatus 104 determines that the time synchronization performance of the first link 108 is faulty or the time synchronization performance of the second link 109 is faulty.

For example, a preset threshold herein may be 55 ns, or may be another value, which is not limited herein.

Optionally, when it is determined that the time synchronization performance is faulty, the slave clock apparatus 104 sends a message to a third apparatus, where the message includes the offset.

For example, the third apparatus may be a network manager.

In the foregoing technical solution, the slave clock apparatus obtains, according to the PTP through the second port, the information required for determining the time offset between the slave clock apparatus and the second apparatus; the slave clock apparatus determines the offset according to the information, where the offset is equal to M multiplied by the time offset, and M is not equal to 0; and if the absolute value of the offset is greater than the threshold, it is determined that the time synchronization performance of the first link is faulty or the time synchronization performance of the second link is faulty. The foregoing technical solution helps to reduce costs of obtaining time synchronization performance of a Precision Time Protocol synchronization network.

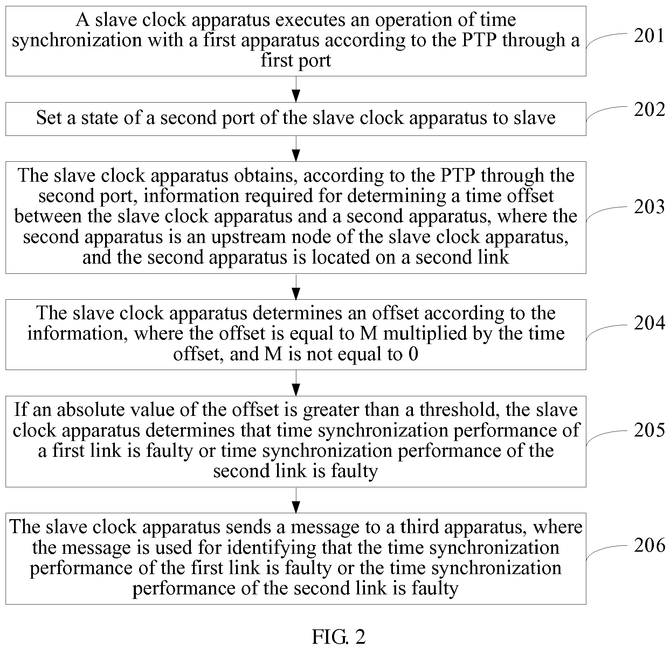

FIG. 2 is a schematic flowchart of a method for a PTP synchronization network according to an embodiment of the present invention. The network structure shown in FIG. 1 may be used for performing the method. Specifically, the slave clock apparatus 104 shown in FIG. 1 may be configured to perform the method. Referring to FIG. 2, the method includes:

201: A slave clock apparatus executes an operation of time synchronization with a first apparatus according to the PTP through a first port.

202: Set a state of a second port of the slave clock apparatus to slave.

203: The slave clock apparatus obtains, according to the PTP through the second port, information required for determining a time offset between the slave clock apparatus and a second apparatus, where the second apparatus is an upstream node of the slave clock apparatus, and the second apparatus is located on a second link.

204: The slave clock apparatus determines an offset according to the information, where the offset is equal to M multiplied by the time offset, and M is not equal to 0.

205: If an absolute value of the offset is greater than a threshold, the slave clock apparatus determines that time synchronization performance of a first link is faulty or time synchronization performance of the second link is faulty.

206: The slave clock apparatus sends a message to a third apparatus, where the message is used for identifying that the time synchronization performance of the first link is faulty or the time synchronization performance of the second link is faulty.

The first apparatus is an upstream node of the slave clock apparatus, the first apparatus is located on the first link, a link from a master clock apparatus to the slave clock apparatus includes the first link and the second link, the slave clock apparatus includes the first port and the second port, the first port is located on the first link, the second port is located on the second link, a state of the first port is slave, and the state of the second port is passive.

For example, the state of the second port of the slave clock apparatus may be set to slave by using a command line.

For example, each of the first apparatus, the second apparatus, the master clock apparatus, and the slave clock apparatus may be a router or a PTN (Packet Transport Network, packet transport network) wavelength division device.

For example, the first apparatus may be a previous hop node of the slave clock apparatus. The first apparatus may also be connected to the slave clock apparatus by using another apparatus located on the first link. The another apparatus may be a transparent clock.

For example, the first apparatus and the master clock apparatus may be a same apparatus.

For example, the second apparatus and the master clock apparatus may be a same apparatus.

For example, the first apparatus, the second apparatus, and the master clock apparatus may be a same apparatus.

For example, the second apparatus may be a previous hop node of the slave clock apparatus. The second apparatus may also be connected to the slave clock apparatus by using another apparatus located on the second link. The another apparatus may be a transparent clock.

For example, if the state of the first port of the slave clock apparatus is slave, and the state of the second port is passive, the first link on which the first port is located may be an active link for time synchronization, and the second link on which the second port is located may be a standby link for time synchronization.

For example, in the PTP, a state of a port of a clock apparatus may be master, slave, or passive.

After the second port of the slave clock apparatus is set to a slave state, the slave clock apparatus may exchange, through the second port, a message with a port, in a master state, of the second apparatus that is the upstream node of the slave clock apparatus, to as to implement time synchronization.

Specifically, the slave clock apparatus obtains, according to the PTP through the second port, the information required for determining the time offset between the slave clock apparatus and the second apparatus.

The information may be obtained by exchanging, by the slave clock apparatus with the second apparatus through the second port, multiple messages corresponding to the operation of time synchronization executed by the slave clock apparatus with the second apparatus.

For example, the slave clock apparatus receives, through the second port, a Sync synchronization message sent by the second apparatus, where a time at which the slave clock apparatus receives the Sync message is t2, the Sync message includes a timestamp t1, and a time at which the second apparatus sends the Sync message is t1;

the slave clock apparatus sends, to the second apparatus through the second port, a Delay_Req delay request message corresponding to the Sync message, where a time at which the slave clock apparatus sends the Delay_Req message is t3; and

the slave clock apparatus receives, through the second port, a Delay_Resp delay response message that is sent by the second apparatus and that is corresponding to the Delay_Req message, where the Delay_Resp message includes a timestamp t4, a time at which the second apparatus receives the Delay_Req message is t4, and t1, t2, t3, and t4 are the information.

Further, the slave clock apparatus determines the offset according to the information, where the offset is equal to M multiplied by the time offset between the slave clock apparatus and the second apparatus, and M is not equal to 0.

For example, if a delay of a message transmit path from a master port of the second apparatus to the second port, in the slave state, of the slave clock apparatus is Delayms, a delay of a message transmit path from the second port, in the slave state, of the slave clock apparatus to the master port of the second apparatus is Delaysm, and the time offset between the slave clock apparatus and the second apparatus is Offset,

$$t2 - t1 = \text{Delayms} + \text{Offset};$$

$$t4 - t3 = \text{Delaysm} - \text{Offset};$$

and

$$(t2 - t1) - (t4 - t3) = (\text{Delayms} + \text{Offset}) - (\text{Delaysm} - \text{Offset});$$

therefore, Offset = [(t2 - t1) - (t4 - t3) - (Delayms - Delaysm)]/2; and

apparently, if Delayms = Delaysm, delays of paths, in two directions, between the master port of the second apparatus and the second port, in the slave state, of the slave clock apparatus are symmetrical, and Offset = [(t2 - t1) - (t4 - t3)]/2.

In this way, the second port, in the slave state, of the slave clock apparatus may obtain the time offset between the slave clock apparatus and the second apparatus according to t1, t2, t3, and t4.

The offset may be (M*Offset), and M is not equal to 0.

Further, the absolute value of the offset is compared with the threshold, and if the absolute value of the offset is greater than the threshold, the slave clock apparatus determines that the time synchronization performance of the first link is faulty or the time synchronization performance of the second link is faulty.

For example, if the absolute value of the offset is greater than the threshold, it may be that the time synchronization performance of the first link, that is, the active link for time synchronization, is faulty, or the time synchronization performance of the second link, that is, the standby link for time synchronization, is faulty, and it may further be that optical fibers between the slave clock apparatus and the second apparatus are asymmetrical.

For example, when the slave clock apparatus determines that an offset exists in time synchronization performance of a link, the slave clock apparatus sends the message to the third apparatus, where the message is used for identifying that the time synchronization performance of the first link is faulty or the time synchronization performance of the second link is faulty, and the message includes the offset.

For example, after the slave clock apparatus determines the offset according to the information, the slave clock apparatus displays the offset by using a display apparatus, where the slave clock apparatus includes the display apparatus. When the offset is greater than the threshold, the slave clock apparatus may report an alarm message to the third apparatus, which helps to reduce costs of obtaining performance of a Precision Time Protocol synchronization network.

It can be seen from the foregoing technical solution that, a slave clock apparatus executes an operation of time synchronization with a first apparatus according to the PTP through a first port; a state of a second port of the slave clock apparatus is set to slave; the slave clock apparatus obtains, according to the PTP through the second port, information required for determining a time offset between the slave clock apparatus and a second apparatus; the slave clock apparatus determines an offset according to the information; if an absolute value of the offset is greater than a threshold, the slave clock apparatus determines that time synchronization performance of a first link is faulty or time synchronization performance of a second link is faulty; the slave clock apparatus sends a message to a third apparatus, where the message includes the offset, which helps to reduce costs of obtaining performance of a Precision Time Protocol synchronization network.

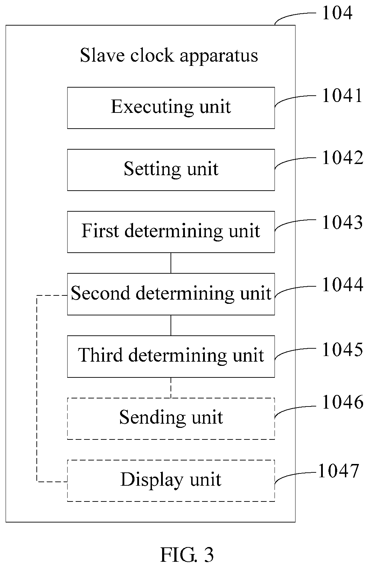

In the network structure shown in FIG. 1, FIG. 3 shows a schematic structural diagram of the slave clock apparatus. The slave clock apparatus 104 includes: an executing unit 1041, a setting unit 1042, a first determining unit 1043, and a second determining unit 1044.

The executing unit 1041 is configured to execute an operation of time synchronization with a first apparatus according to the PTP through a first port, where the first apparatus is an upstream node of the slave clock apparatus, the first apparatus is located on a first link, a link from a master clock apparatus to the slave clock apparatus includes the first link and a second link, the slave clock apparatus includes the first port and a second port, the first port is located on the first link, the second port is located on the second link, a state of the first port is slave, and a state of the second port is passive.

For example, the executing unit 1041 may be a processor in the slave clock apparatus.

The setting unit 1042 is configured to set the state of the second port to slave.

For example, the setting unit 1042 may be a processor in the slave clock apparatus.

For example, the state of the second port may be set to slave by using a command line.

The first determining unit 1043 is configured to obtain, according to the PTP through the second port, information required for determining a time offset between the slave clock apparatus and a second apparatus, where the second apparatus is an upstream node of the slave clock apparatus, and the second apparatus is located on the second link.

For example, the first determining unit 1043 may be a processor in the slave clock apparatus.

The second determining unit 1044 is configured to determine an offset according to the information obtained by the first determining unit, where the offset is equal to M multiplied by the time offset, and M is not equal to 0.

For example, the second determining unit 1044 may be a processor in the slave clock apparatus.

The slave clock apparatus may further include:

a third determining unit 1045, configured to: if an absolute value of the offset determined by the second determining unit is greater than a threshold, determine that time synchronization performance of the first link is faulty or time synchronization performance of the second link is faulty.

For example, the third determining unit 1045 may be a processor in the slave clock apparatus.

For example, the first apparatus and the master clock apparatus may be a same apparatus.

For example, the second apparatus and the master clock apparatus may be a same apparatus.

For example, the first apparatus, the second apparatus, and the master clock apparatus may be a same apparatus.

The slave clock apparatus may further include:

a sending unit 1046, configured to send a message to a third apparatus, where the message is used for identifying that the time synchronization performance of the first link is faulty or the time synchronization performance of the second link is faulty, which is determined by the third determining unit.

For example, the sending unit 1046 may be a transmitter in the slave clock apparatus.

The first determining unit 1043 may be configured to: exchange, with the second apparatus through the second port, multiple messages corresponding to the operation of time synchronization executed by the slave clock apparatus with the second apparatus, so as to obtain the information.

The first determining unit 1043 includes:

a first receiving subunit, configured to receive, through the second port, a Sync synchronization message sent by the second apparatus, where a time at which the slave clock apparatus receives the Sync message is t2, the Sync message includes a timestamp t1, and a time at which the second apparatus sends the Sync message is t1;

a sending subunit, configured to send, to the second apparatus through the second port, a Delay_Req delay request message corresponding to the Sync message, where a time at which the slave clock apparatus sends the Delay_Req message is t3; and

a second receiving subunit, configured to receive, through the second port, a Delay_Resp delay response message that is sent by the second apparatus and that is corresponding to the Delay_Req message, where the Delay_Resp message includes a timestamp t4, a time at which the second apparatus receives the Delay_Req message is t4, and t1, t2, t3, and t4 are the information.

The slave clock apparatus may further include: a sending unit 1046, configured to send a message to a third apparatus, where the message includes the offset determined by the second determining unit 1044.

The slave clock apparatus may further include: a display unit 1047, configured to display the offset determined by the second determining unit 1044.

It can be seen from the foregoing technical solution that, a slave clock apparatus executes an operation of time synchronization with a first apparatus according to the PTP through a first port; a state of a second port of the slave clock apparatus is set to slave; the slave clock apparatus obtains, according to the PTP through the second port, information required for determining a time offset between the slave clock apparatus and a second apparatus; the slave clock apparatus determines an offset according to the information; if an absolute value of the offset is greater than a threshold, the slave clock apparatus determines that time synchronization performance of a first link is faulty or time synchronization performance of a second link is faulty; the slave clock apparatus sends a message to a third apparatus, where the message includes the offset, which helps to reduce costs of obtaining performance of a Precision Time Protocol synchronization network.

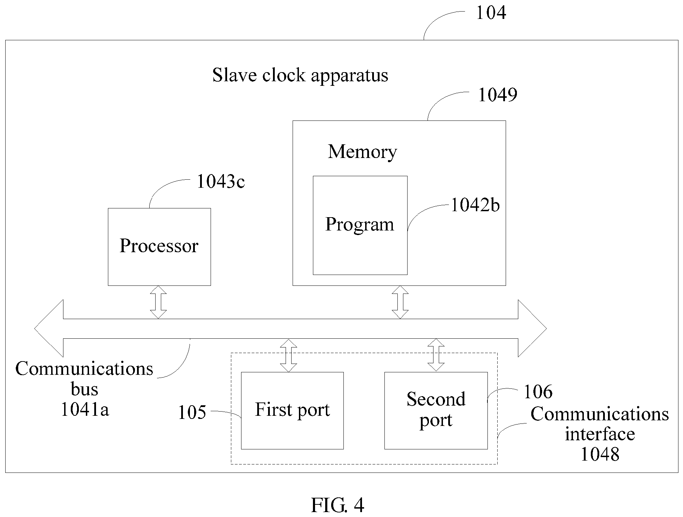

An example of the present invention provides a slave clock apparatus. FIG. 4 is a schematic structural diagram of the slave clock apparatus. The slave clock apparatus may be the slave clock apparatus 104 shown in FIG. 1. The slave clock apparatus may be a router. The slave clock apparatus includes:

a processor (Processor) 1043c, a communications interface (Communications Interface) 1048, a memory (Memory) 1049, and a communications bus 1041a.

The processor 1043c, the communications interface 1048, and the memory 1049 are coupled by using the communications bus 1041a.

For example, the communications interface 1048 may be the first port 105 or the second port 106.

The processor 1043c is configured to execute a program 1042b, and specifically perform the steps in the method shown in FIG. 1 or FIG. 2.

Specifically, the program 1042b may include code, and the code includes a computer instruction.

For example, the processor 1043c may be a central processing unit CPU (Central Processing Unit), or an application-specific integrated circuit ASIC (Application Specific Integrated Circuit).

The memory 1049 is configured to store the program 1042b, and the memory 1049 may include a high speed RAM (Random Access Memory), and may also include a non-volatile memory (Non-volatile Memory), such as at least one magnetic disk storage. The program 1042b may specifically include:

an executing unit 1041, configured to execute an operation of time synchronization with a first apparatus according to the PTP through a first port, where the first apparatus is an upstream node of the slave clock apparatus, the first apparatus is located on a first link, a link from a master clock apparatus to the slave clock apparatus includes the first link and a second link, the slave clock apparatus includes the first port and a second port, the first port is located on the first link, the second port is located on the second link, a state of the first port is slave, and a state of the second port is passive;

a setting unit 1042, configured to set the state of the second port to slave;

a first determining unit 1043, configured to obtain, according to the PTP through the second port, information required for determining a time offset between the slave clock apparatus and a second apparatus, where the second apparatus is an upstream node of the slave clock apparatus, and the second apparatus is located on the second link; and

a second determining unit 1044, configured to determine an offset according to the information obtained by the first determining unit 1043, where the offset is equal to M multiplied by the time offset between the slave clock apparatus and the second apparatus, and M is not equal to 0.

For example, the state of the second port may be set to slave by using a command line.

Optionally, the program 1042b may further include:

a third determining unit 1045, configured to: if an absolute value of the offset determined by the second determining unit 1044 is greater than a threshold, determine that time synchronization performance of the first link is faulty or time synchronization performance of the second link is faulty.

For example, the first apparatus and the master clock apparatus may be a same apparatus.

For example, the second apparatus and the master clock apparatus may be a same apparatus.

For example, the first apparatus, the second apparatus, and the master clock apparatus may be a same apparatus.

Optionally, the program 1042b may further include:

a sending unit 1046, configured to send a message to a third apparatus, where the message is used for identifying that the time synchronization performance of the first link is faulty or the time synchronization performance of the second link is faulty, which is determined by the third determining unit 1045.

Optionally, in the slave clock apparatus, the first determining unit 1043 is configured to:

exchange, with the second apparatus through the second port, multiple messages corresponding to the operation of time synchronization executed by the slave clock apparatus with the second apparatus, so as to obtain the information.

Optionally, the first determining unit 1043 includes:

a first receiving subunit, configured to receive, through the second port, a Sync synchronization message sent by the second apparatus, where a time at which the slave clock apparatus receives the Sync message is t2, the Sync message includes a timestamp t1, and a time at which the second apparatus sends the Sync message is t1;

a sending subunit, configured to send, to the second apparatus through the second port, a Delay_Req delay request message corresponding to the Sync message, where a time at which the slave clock apparatus sends the Delay_Req message is t3;

a second receiving subunit, configured to receive, through the second port, a Delay_Resp delay response message that is sent by the second apparatus and that is corresponding to the Delay_Req message, where the Delay_Resp message includes a timestamp t4, a time at which the second apparatus receives the Delay_Req message is t4, and t1, t2, t3, and t4 are the information.

Optionally, the program 1042b further includes:

a sending unit 1046, configured to send a message to a third apparatus, where the message includes the offset determined by the second determining unit 1044.

Optionally, the program 1042b further includes:

a display unit 1047, configured to display the offset determined by the second determining unit 1044.

For specific implementation of modules in the program 1042b, reference may be made to corresponding modules in the embodiment shown in FIG. 3, and details are not provided herein again.

It can be seen from the foregoing technical solution that, a slave clock apparatus executes an operation of time synchronization with a first apparatus according to the PTP through a first port; a state of a second port of the slave clock apparatus is set to slave; the slave clock apparatus obtains, according to the PTP through the second port, information required for determining a time offset between the slave clock apparatus and a second apparatus; the slave clock apparatus determines an offset according to the information; if an absolute value of the offset is greater than a threshold, the slave clock apparatus determines that time synchronization performance of a first link is faulty or time synchronization performance of a second link is faulty; the slave clock apparatus sends a message to a third apparatus, where the message includes the offset, which helps to reduce costs of obtaining performance of a Precision Time Protocol synchronization network.

In the several embodiments provided by this application, it should be understood that the disclosed method and apparatus may be implemented in other manners. For example, the described device embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in the devices and the systems in the embodiments of the present invention may be integrated into one processing unit, or each of the units may exist alone physically, or two or more units are integrated into one unit. The unit may be implemented in a form of hardware, or may be implemented in a form of hardware in addition to a software functional unit.

All or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a USB flash drive, a removable hard disk, a read-only memory (Read Only Memory, ROM for short), a random access memory (Random Access Memory, RAM for short), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for a Precision Time Protocol synchronization network, comprising:

   Executing (201), by a slave clock apparatus, an operation of time synchronization with a first apparatus according to Precision Time Protocol, PTP, through a first port, wherein the first apparatus is an upstream node of the slave clock apparatus, the first apparatus is located on a first link, a link from a master clock apparatus to the slave clock apparatus comprises the first link and a second link, the slave clock apparatus comprises the first port and a second port, the first port is located on the first link, the second port is located on the second link, a state of the first port is slave, and a state of the second port is passive;
   setting (202) the state of the second port to slave;
   obtaining (203), by the slave clock apparatus according to the PTP through the second port, information required for determining a time offset between the slave clock apparatus and a second apparatus, wherein the second apparatus is an upstream node of the slave clock apparatus, and the second apparatus is located on the second link; and
   determining (204), by the slave clock apparatus, an offset according to the information, wherein the offset is equal to M multiplied by the time offset, and M is not equal to 0;
wherein after the determining (204), by the slave clock apparatus, an offset according to the information, the method further comprises:
if an absolute value of the offset is greater than a threshold, determining (205), by the slave clock apparatus, that time synchronization performance of the first link is faulty or time synchronization performance of the second link is faulty;
wherein after the determining (205), by the slave clock apparatus, that time synchronization performance of the first link is faulty or time synchronization performance of the second link is faulty, the method further comprises:
Sending (206), by the slave clock apparatus, a message to a third apparatus, wherein the message is used for identifying that the time synchronization performance of the first link is faulty or the time synchronization performance of the second link is faulty.

2. The method according to claim 1, wherein the obtaining (203) by the slave clock apparatus according to the PTP through the second port, information required for determining a time offset between the slave clock apparatus and a second apparatus comprises:
exchanging, by the slave clock apparatus with the second apparatus through the second port, multiple messages corresponding to the operation of time synchronization executed by the slave clock apparatus with the second apparatus, so as to obtain the information.

3. The method according to claim 2, wherein the exchanging, by the slave clock apparatus with the second apparatus through the second port, multiple messages corresponding to the operation of time synchronization executed by the slave clock apparatus with the second apparatus comprises:

receiving, by the slave clock apparatus through the second port, a Sync message sent by the second apparatus, wherein a time at which the slave clock apparatus receives the Sync message is t2, the Sync message comprises a timestamp t1, and a time at which the second apparatus sends the Sync message is t1;
sending, by the slave clock apparatus to the second apparatus through the second port, a Delay_Req message corresponding to the Sync message, wherein a time at which the slave clock apparatus sends the Delay_Req message is t3; and
receiving, by the slave clock apparatus through the second port, a Delay_Resp message that is sent by the second apparatus and that is corresponding to the Delay_Req message, wherein the Delay_Resp message comprises a timestamp t4, a time at which the second apparatus receives the Delay_Req message is t4, and t1, t2, t3, and t4 are the information.

4. The method according to claim 1, wherein after the determining (204), by the slave clock apparatus, an offset according to the information, the method further comprises: sending, by the slave clock apparatus, a message to a third apparatus, wherein the message comprises the offset.

5. The method according to claim 1, wherein after the determining (204), by the slave clock apparatus, an offset according to the information, the method further comprises: displaying, by the slave clock apparatus, the offset by using a display apparatus, wherein the slave clock apparatus comprises the display apparatus.

6. A slave clock apparatus (104), comprising:

an executing unit (1041), configured to execute an operation of time synchronization with a first apparatus according to Precision Time Protocol, PTP, through a first port,
wherein the first apparatus is an upstream node of the slave clock apparatus, the first apparatus is located on a first link, a link from a master clock apparatus to the slave clock apparatus comprises the first link and a second link, the slave clock apparatus comprises the first port and a second port, the first port is located on the first link, the second port is located on the second link, a state of the first port is slave, and a state of the second port is passive;
a setting unit (1042), configured to set the state of the second port to slave;
a first determining unit (1043), configured to obtain, according to the PTP through the second port, information required for determining a time offset between the slave clock apparatus and a second apparatus, wherein the second apparatus is an upstream node of the slave clock apparatus, and the second apparatus is located on the second link;
a second determining unit (1044), configured to determine an offset according to the information obtained by the first determining unit, wherein the offset is equal to M multiplied by the time offset, and M is not equal to 0; and

a third determining unit (1045), configured to: if an absolute value of the offset determined by the second determining unit is greater than a threshold, determine that time synchronization performance of the first link is faulty or time synchronization performance of the second link is faulty;

the slave clock apparatus further comprising:

a sending unit (1046), configured to send a message to a third apparatus, wherein the message is used for identifying that the time synchronization performance of the first link is faulty or the time synchronization performance of the second link is faulty, which is determined by the third determining unit.

7. The slave clock apparatus according to claim 6, wherein the first determining unit is configured to:

exchange, with the second apparatus through the second port, multiple messages corresponding to the operation of time synchronization executed by the slave clock apparatus with the second apparatus, so as to obtain the information.

8. The slave clock apparatus according to claim 7, wherein the first determining unit comprises:

a first receiving subunit, configured to receive, through the second port, a Sync message sent by the second apparatus, wherein a time at which the slave clock apparatus receives the Sync message is t2, the Sync message comprises a timestamp t1, and a time at which the second apparatus sends the Sync message is t1;

a sending subunit, configured to send, to the second apparatus through the second port, a Delay_Req message corresponding to the Sync message, wherein a time at which the slave clock apparatus sends the Delay_Req message is t3;

a second receiving subunit, configured to receive, through the second port, a Delay_Resp message that is sent by the second apparatus and that is corresponding to the Delay_Req message, wherein the Delay_Resp message comprises a timestamp t4, a time at which the second apparatus receives the Delay_Req message is t4, and t1, t2, t3, and t4 are the information.

9. The slave clock apparatus according to claim 6, further comprising:

a sending unit (1046), configured to send a message to a third apparatus, wherein the message comprises the offset determined by the second determining unit.

10. The slave clock apparatus according to claim 6, further comprising:

a display unit (1047), configured to display the offset determined by the second determining unit.

## Patentansprüche

1. Verfahren für ein "Precision Time Protocol"-Synchronisationsnetzwerk, umfassend:

Ausführen (201), durch eine Slave-Taktvorrichtung, einer Operation einer Zeitsynchronisation mit einer ersten Vorrichtung gemäß "Precision Time Protocol" bzw. PTP über einen ersten Anschluss, wobei die erste Vorrichtung ein Upstream-Knoten der Slave-Taktvorrichtung ist, sich die erste Vorrichtung auf einer ersten Verbindung befindet, eine Verbindung von einer Master-Taktvorrichtung zur Slave-Taktvorrichtung die erste Verbindung und eine zweite Verbindung umfasst, die Slave-Taktvorrichtung den ersten Anschluss und einen zweiten Anschluss umfasst, sich der erste Anschluss auf der ersten Verbindung befindet, sich der zweite Anschluss auf der zweiten Verbindung befindet, ein Zustand des ersten Anschlusses Slave ist und ein Zustand des zweiten Anschlusses passiv ist;

Einstellen (202) des Zustands des zweiten Anschlusses zu Slave;

Erhalten (203), durch die Slave-Taktvorrichtung gemäß dem PTP über den zweiten Anschluss, von Informationen, die zum Bestimmen eines Zeitoffsets zwischen der Slave-Taktvorrichtung und einer zweiten Vorrichtung benötigt werden, wobei die zweite Vorrichtung ein Upstream-Knoten der Slave-Taktvorrichtung ist und sich die zweite Vorrichtung auf der zweiten Verbindung befindet; und

Bestimmen (204), durch die Slave-Taktvorrichtung, eines Offsets gemäß den Informationen, wobei der Offset gleich M multipliziert mit dem Zeitoffset ist und M ungleich 0 ist;

wobei das Verfahren nach dem Bestimmen (204), durch die Slave-Taktvorrichtung, eines Offsets gemäß den Informationen ferner Folgendes umfasst:

falls ein absoluter Wert des Offsets größer als eine Schwelle ist, Bestimmen (205), durch die Slave-Taktvorrichtung, dass eine Zeitsynchronisationsdurchführung der ersten Verbindung fehlerhaft ist oder eine Zeitsynchronisationsdurchführung der zweiten Verbindung fehlerhaft ist;

wobei das Verfahren nach dem Bestimmen (205), durch die Slave-Taktvorrichtung, dass eine Zeitsynchronisationsdurchführung der ersten Verbindung fehlerhaft ist oder eine Zeitsynchronisationsdurchführung der zweiten Verbindung fehlerhaft ist, ferner Folgendes umfasst:

Senden (206), durch die Slave-Taktvorrichtung, einer Nachricht zu einer dritten Vorrichtung, wobei die Nachricht zum Identifizieren verwendet wird, dass die Zeitsynchronisationsdurchführung der ersten Verbindung fehlerhaft ist oder die Zeitsynchronisationsdurchführung der zweiten Verbindung fehlerhaft ist.

2. Verfahren nach Anspruch 1, wobei das Erhalten (203), durch die Slave-Taktvorrichtung gemäß dem PTP über den zweiten Anschluss, von Informationen, die zum Bestimmen eines Zeitoffsets zwischen der Slave-Taktvorrichtung und einer zweiten Vorrichtung benötigt werden, Folgendes umfasst:

Austauschen, durch die Slave-Taktvorrichtung mit der zweiten Vorrichtung über den zweiten Anschluss, mehrerer Nachrichten, die der Operation der Zeitsynchronisation, die durch die Slave-Taktvorrichtung mit der zweiten Vorrichtung ausgeführt wird, entsprechen, damit die Informationen erhalten werden.

3. Verfahren nach Anspruch 2, wobei das Austauschen, durch die Slave-Taktvorrichtung mit der zweiten Vorrichtung über den zweiten Anschluss, mehrerer Nachrichten, die der Operation einer Zeitsynchronisation, die durch die Slave-Taktvorrichtung mit der zweiten Vorrichtung ausgeführt wird, entsprechen, Folgendes umfasst:

Empfangen, durch die Slave-Taktvorrichtung über den zweiten Anschluss, einer Sync-Nachricht, die durch die zweite Vorrichtung gesendet wird, wobei eine Zeit, zu der die Slave-Taktvorrichtung die Sync-Nachricht empfängt, t2 ist, die Sync-Nachricht einen Zeitstempel t1 umfasst und eine Zeit, zu der die zweite Vorrichtung die Sync-Nachricht sendet, t1 ist;

Senden, durch die Slave-Taktvorrichtung zur zweiten Vorrichtung über den zweiten Anschluss, einer Delay_Req-Nachricht, die der Sync-Nachricht entspricht, wobei eine Zeit, zu der die Slave-Taktvorrichtung die Delay_Req-Nachricht sendet, t3 ist; und

Empfangen, durch die Slave-Taktvorrichtung über den zweiten Anschluss, einer Delay_Resp-Nachricht, die durch die zweite Vorrichtung gesendet wird und der Delay_Req-Nachricht entspricht, wobei die Delay_Resp-Nachricht einen Zeitstempel t4 umfasst, eine Zeit, zu der die zweite Vorrichtung die Delay_Req-Nachricht empfängt, t4 ist und t1, t2, t3 und t4 die Informationen sind.

4. Verfahren nach Anspruch 1, wobei das Verfahren nach dem Bestimmen (204), durch die Slave-Taktvorrichtung, eines Offsets gemäß den Informationen ferner Folgendes umfasst:

Senden, durch die Slave-Taktvorrichtung, einer Nachricht zu einer dritten Vorrichtung, wobei die Nachricht den Offset umfasst.

5. Verfahren nach Anspruch 1, wobei das Verfahren nach dem Bestimmen (204), durch die Slave-Taktvorrichtung, eines Offsets gemäß den Informationen ferner Folgendes umfasst:

Anzeigen, durch die Slave-Taktvorrichtung, des Offsets unter Verwendung einer Anzeigevorrichtung, wobei die Slave-Taktvorrichtung die Anzeigevorrichtung umfasst.

6. Slave-Taktvorrichtung (104), umfassend:

eine Ausführungseinheit (1041), die konfiguriert ist zum Ausführen einer Operation einer Zeitsynchronisation mit einer ersten Vorrichtung gemäß "Precision Time Protocol" bzw. PTP über einen ersten Anschluss, wobei die erste Vorrichtung ein Upstream-Knoten der Slave-Taktvorrichtung ist, sich die erste Vorrichtung auf einer ersten Verbindung befindet, eine Verbindung von einer Master-Taktvorrichtung zur Slave-Taktvorrichtung die erste Verbindung und eine zweite Verbindung umfasst, die Slave-Taktvorrichtung den ersten Anschluss und einen zweiten Anschluss umfasst, sich der erste Anschluss auf der ersten Verbindung befindet, sich der zweite Anschluss auf der zweiten Verbindung verbindet, ein Zustand des ersten Anschlusses Slave ist und ein Zustand des zweiten Anschlusses passiv ist;

eine Einstelleinheit (1042), die konfiguriert ist zum Einstellen des Zustands des zweiten Anschlusses zu Slave;

eine erste Bestimmungseinheit (1043), die konfiguriert ist zum Erhalten, gemäß dem PTP über den zweiten Anschluss, von Informationen, die zum Bestimmen eines Zeitoffsets zwischen der Slave-Taktvorrichtung und einer zweiten Vorrichtung benötigt werden, wobei die zweite Vorrichtung ein Upstream-Knoten der Slave-Taktvorrichtung ist und sich die zweite Vorrichtung auf der zweiten Verbindung befindet;

eine zweite Bestimmungseinheit (1044), die konfiguriert ist zum Bestimmen eines Offsets gemäß den durch die erste Bestimmungseinheit erhaltenen Informationen, wobei der Offset gleich M multipliziert mit dem Zeitoffset ist und M ungleich 0 ist; und
eine dritte Bestimmungseinheit (1045), die, falls ein absoluter Wert des durch die zweite Bestimmungseinheit bestimmten Offsets größer als eine Schwelle ist, konfiguriert ist zum Bestimmen, dass eine Zeitsynchronisationsdurchführung der ersten Verbindung fehlerhaft ist oder eine Zeitsynchronisationsdurchführung der zweiten Verbindung fehlerhaft ist;
wobei die Slave-Taktvorrichtung ferner Folgendes umfasst:
eine Sendeeinheit (1046), die konfiguriert ist zum Senden einer Nachricht zu einer dritten Vorrichtung, wobei die Nachricht zum Identifizieren verwendet wird, dass die Zeitsynchronisationsdurchführung der ersten Verbindung fehlerhaft ist oder die Zeitsynchronisationsdurchführung der zweiten Verbindung fehlerhaft ist, was durch die dritte Bestimmungseinheit bestimmt wird.

7. Slave-Taktvorrichtung nach Anspruch 6, wobei die erste Bestimmungseinheit zu Folgendem konfiguriert ist:
Austauschen, mit der zweiten Vorrichtung über den zweiten Anschluss, mehrerer Nachrichten, die der Operation der Zeitsynchronisation, die durch die Slave-Taktvorrichtung mit der zweiten Vorrichtung ausgeführt wird, entsprechen, damit die Informationen erhalten werden.

8. Slave-Taktvorrichtung nach Anspruch 7, wobei die erste Bestimmungseinheit Folgendes umfasst:

eine erste Empfangsuntereinheit, die konfiguriert ist zum Empfangen, über den zweiten Anschluss, einer Sync-Nachricht, die durch die zweite Vorrichtung gesendet wird, wobei eine Zeit, zu der die Slave-Taktvorrichtung die Sync-Nachricht empfängt, t2 ist, die Sync-Nachricht einen Zeitstempel t1 umfasst und eine Zeit, zu der die zweite Vorrichtung die Sync-Nachricht sendet, t1 ist;
eine Sendeuntereinheit, die konfiguriert ist zum Senden, zur zweiten Vorrichtung über den zweiten Anschluss, einer Delay_Req-Nachricht, die der Sync-Nachricht entspricht, wobei eine Zeit, zu der die Slave-Taktvorrichtung die Delay_Req-Nachricht sendet, t3 ist;
eine zweite Empfangsuntereinheit, die konfiguriert ist zum Empfangen, über den zweiten Anschluss, einer Delay_Resp-Nachricht, die durch die zweite Vorrichtung gesendet wird und der Delay_Req-Nachricht entspricht, wobei die Delay_Resp-Nachricht einen Zeitstempel t4 umfasst, eine Zeit, zu der die zweite Vorrichtung die Delay_Req-Nachricht empfängt, t4 ist und t1, t2, t3 und t4 die Informationen sind.

9. Slave-Taktvorrichtung nach Anspruch 6, die ferner Folgendes umfasst:
eine Sendeeinheit (1046), die konfiguriert ist zum Senden einer Nachricht zu einer dritten Vorrichtung, wobei die Nachricht den durch die zweite Bestimmungseinheit bestimmten Offset umfasst.

10. Slave-Taktvorrichtung nach Anspruch 6, die ferner Folgendes umfasst:
eine Anzeigeeinheit (1047), die konfiguriert ist zum Anzeigen des durch die zweite Bestimmungseinheit bestimmten Offsets.

**Revendications**

1. Procédé pour un réseau de synchronisation à protocole de précision temporelle, comprenant les étapes suivantes :

exécuter (201), par un appareil à horloge esclave, une opération de synchronisation temporelle avec un premier appareil selon le protocole de précision temporelle, PTP, à travers un premier port, où le premier appareil est un noeud amont de l'appareil à horloge esclave, le premier appareil est situé sur une première liaison, une liaison d'un appareil à horloge maîtresse vers l'appareil à horloge esclave comprend la première liaison et une seconde liaison, l'appareil à horloge esclave comprend le premier port et un second port, le premier port est situé sur la première liaison, le second port est situé sur la seconde liaison, un état du premier port est un état d'esclave, et un état du second port est un état passif ;
définir (202) l'état du deuxième port à esclave ;
obtenir (203), par l'appareil à horloge esclave, selon le PTP, à travers le deuxième port, les informations nécessaires pour déterminer un décalage temporel entre l'appareil à horloge esclave et un deuxième appareil, où le deuxième appareil est un noeud amont de l'appareil à horloge esclave, et le deuxième appareil est situé sur la deuxième liaison ; et
déterminer (204), par l'appareil à horloge esclave, un décalage selon les informations, où le décalage est égal à M multiplié par le décalage temporel, et M n'est pas égal à 0 ; où, après la détermination (204), par l'appareil à horloge esclave, d'un décalage selon les informations, le procédé comprend en outre les étapes suivantes :

si une valeur absolue du décalage est supérieure à un seuil, déterminer (205), par l'appareil à horloge esclave, que la performance de synchronisation temporelle de la première liaison est défectueuse ou que la performance de synchronisation temporelle de la seconde liaison est défectueuse ;

où, après la détermination (205), par l'appareil à horloge esclave, que la performance de synchronisation temporelle de la première liaison est défectueuse ou que la performance de synchronisation temporelle de la seconde liaison est défectueuse, le procédé comprend en outre les étapes suivantes :

envoyer (206), par l'appareil à horloge esclave, un message à un troisième appareil, où le message est utilisé pour identifier que la performance de synchronisation temporelle de la première liaison est défectueuse ou que la performance de synchronisation temporelle de la deuxième liaison est défectueuse.

2. Procédé selon la revendication 1, dans lequel l'obtention (203) par l'appareil à horloge esclave, selon le PTP, à travers le deuxième port, des informations nécessaires pour déterminer un décalage temporel entre l'appareil à horloge esclave et un deuxième appareil comprend l'étape suivante :

échanger, par l'appareil à horloge esclave, avec le deuxième appareil, à travers le deuxième port, plusieurs messages correspondant à l'opération de synchronisation temporelle exécutée par l'appareil à horloge esclave avec le deuxième appareil, afin d'obtenir les informations.

3. Procédé selon la revendication 2, dans lequel l'échange, par l'appareil à horloge esclave, avec le deuxième appareil, à travers le deuxième port, de plusieurs messages correspondant à l'opération de synchronisation temporelle exécutée par l'appareil à horloge esclave avec le deuxième appareil comprend les étapes suivantes :

recevoir, par l'appareil à horloge esclave, à travers le deuxième port, un message Sync envoyé par le deuxième appareil, où un temps auquel l'appareil à horloge esclave reçoit le message Sync est t2, le message Sync comprend une estampille temporelle t1, et un temps auquel le deuxième appareil envoie le message Sync est t1 ;

envoyer, par l'appareil à horloge esclave, au deuxième appareil, à travers le deuxième port, un message Delay_Req correspondant au message Sync, où un temps auquel l'appareil à horloge esclave envoie le message Delay_Req est t3 ; et

recevoir, par l'appareil à horloge esclave, à travers le deuxième port, un message Delay_Resp qui est envoyé par le deuxième appareil et qui correspond au message Delay_Req, où le message Delay_Resp comprend une estampille temporelle t4, un temps auquel le deuxième appareil reçoit le message Delay_Req est t4, et t1, t2, t3 et t4 sont les informations.

4. Procédé selon la revendication 1, dans lequel, après avoir déterminé (204), par l'appareil à horloge esclave, un décalage selon les informations, le procédé comprend en outre d'envoyer, par l'appareil à horloge esclave, un message à un troisième appareil, où le message comprend le décalage.

5. Procédé selon la revendication 1, dans lequel, après avoir déterminé (204), par l'appareil à horloge esclave, un décalage selon les informations, le procédé comprend en outre d'afficher, par l'appareil à horloge esclave, le décalage en utilisant un appareil d'affichage, où l'appareil à horloge esclave comprend l'appareil d'affichage.

6. Appareil à horloge esclave (104), comprenant :

une unité d'exécution (1041), configurée pour exécuter une opération de synchronisation temporelle avec un premier appareil selon le protocole de précision temporelle, PTP, à travers un premier port, où le premier appareil est un noeud amont de l'appareil à horloge esclave, le premier appareil est situé sur une première liaison, une liaison d'un appareil à horloge maîtresse vers l'appareil à horloge esclave comprend la première liaison et une seconde liaison, l'appareil à horloge esclave comprend le premier port et un second port, le premier port est situé sur la première liaison, le second port est situé sur la seconde liaison, un état du premier port est un état d'esclave, et un état du second port est un état passif ;

une unité de définition (1042), configurée pour définir l'état du deuxième port à esclave ;

une première unité de détermination (1043), configurée pour obtenir, selon le PTP, à travers le deuxième port, les informations nécessaires pour déterminer un décalage temporel entre l'appareil à horloge esclave et un deuxième appareil, où le deuxième appareil est un noeud amont de l'appareil à horloge esclave, et le deuxième appareil est situé sur la deuxième liaison ;

une deuxième unité de détermination (1044), configurée pour déterminer un décalage selon les informations obtenues par la première unité de détermination, où le décalage est égal à M multiplié par le décalage temporel, et M n'est pas égal à 0 ; et

une troisième unité de détermination (1045), configurée pour: si une valeur absolue du décalage déterminé par la deuxième unité de détermination est supérieure à un seuil, déterminer que la performance de synchronisation temporelle de la première liaison est défectueuse ou que la performance de synchronisation temporelle de la seconde liaison est défectueuse ;

l'appareil à horloge esclave comprenant en outre :

une unité d'envoi (1046), configurée pour envoyer un message à un troisième appareil, où le message est utilisé pour identifier que la performance de synchronisation temporelle de la première liaison est défectueuse ou que la performance de synchronisation temporelle de la deuxième liaison est défectueuse, ce qui est déterminé par la troisième unité de détermination.

7. Appareil à horloge esclave selon la revendication 6, dans lequel la première unité de détermination est configurée pour :

échanger, avec le deuxième appareil à travers le deuxième port, plusieurs messages correspondant à l'opération de synchronisation temporelle exécutée par l'appareil à horloge esclave avec le deuxième appareil, afin d'obtenir les informations.

8. Appareil à horloge esclave selon la revendication 7, dans lequel la première unité de détermination comprend :

une première sous-unité de réception, configurée pour recevoir, à travers le deuxième port, un message Sync envoyé par le deuxième appareil, où un temps auquel l'appareil à horloge esclave reçoit le message Sync est $t2$, le message Sync comprend une estampille temporelle $t1$, et un temps auquel le deuxième appareil envoie le message Sync est $t1$;

une sous-unité d'envoi, configurée pour envoyer, au deuxième appareil, à travers le deuxième port, un message Delay_Req correspondant au message Sync, où un temps auquel l'appareil à horloge esclave envoie le message Delay_Req est $t3$ ;

une seconde sous-unité de réception, configurée pour recevoir, à travers le deuxième port, un message Delay_Resp qui est envoyé par le deuxième appareil et qui correspond au message Delay_Req, où le message Delay_Resp comprend une estampille temporelle $t4$, un temps auquel le deuxième appareil reçoit le message Delay_Req est $t4$, et $t1$, $t2$, $t3$ et $t4$ sont les informations.

9. Appareil à horloge esclave selon la revendication 6, comprenant en outre :

une unité d'envoi (1046), configurée pour envoyer un message à un troisième appareil, où le message comprend le décalage déterminé par la deuxième unité de détermination.

10. Appareil à horloge esclave selon la revendication 6, comprenant en outre :

une unité d'affichage (1047), configurée pour afficher le décalage déterminé par la deuxième unité de détermination.

FIG. 1

A slave clock apparatus executes an operation of time synchronization with a first apparatus according to the PTP through a first port ⟋ 201

↓

Set a state of a second port of the slave clock apparatus to slave ⟋ 202

↓

The slave clock apparatus obtains, according to the PTP through the second port, information required for determining a time offset between the slave clock apparatus and a second apparatus, where the second apparatus is an upstream node of the slave clock apparatus, and the second apparatus is located on a second link ⟋ 203

↓

The slave clock apparatus determines an offset according to the information, where the offset is equal to M multiplied by the time offset, and M is not equal to 0 ⟋ 204

↓

If an absolute value of the offset is greater than a threshold, the slave clock apparatus determines that time synchronization performance of a first link is faulty or time synchronization performance of the second link is faulty ⟋ 205

↓

The slave clock apparatus sends a message to a third apparatus, where the message is used for identifying that the time synchronization performance of the first link is faulty or the time synchronization performance of the second link is faulty ⟋ 206

FIG. 2

EP 2 991 250 B1

104

Slave clock apparatus

Executing unit — 1041

Setting unit — 1042

First determining unit — 1043

Second determining unit — 1044

Third determining unit — 1045

Sending unit — 1046

Display unit — 1047

FIG. 3

20

104

Slave clock apparatus

1049

Memory

1043c

Program | 1042b

Processor

Communications
bus
1041a

105 | First port

Second
port

106
Communications
interface
1048

FIG. 4

**EP 2 991 250 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102546009 A